# EUROPEAN PATENT SPECIFICATION

(11) **EP 0 669 967 B1**
(45) Date of publication and mention of the grant of the patent: **18.06.1997**
(21) Application number: 94900215.8
(22) Date of filing: 16.11.1993
(51) Int. Cl.: C09K 21/02

(54) **INTUMESCENT PRODUCTS**
SICH AUFBLÄHENDE PRODUKTE
PRODUITS INTUMESCENTS

(30) Priority: 18.11.1992 GB 9224199; 21.05.1993 GB 9310506
(43) Date of publication of application: 06.09.1995
(73) Proprietor: ENVIRONMENTAL SEALS LIMITED, Dover, Kent, CT15 5HR (GB)
(72) Inventor: WARD, Derek Alfred, Dover, Kent CT15 5HR (GB); COOKE, Ronald Anthony, Cumbria LA9 6PZ (GB); SMITH, Christopher, CumbriaLA9 6PZ (GB)
(74) Representative: Hutchins, Michael Richard
(86) International application number: GB9302354
(87) International publication number: WO9411462

(56) References cited:
- EP-A- 0 508 751
- WO-A-88/02019
- WO-A-91/11498
- AT-A- 392 479
- DE-A- 4 007 060
- DE-A- 4 135 678

## Description

This invention relates to a flexible intumescent sheet material for use as a fire seal, and to a method for making such a flexible intumescent sheet material.

Intumescent fire seals are well known. Typically such fire seals take the form of rigid boards and sheets, and cannot readily be applied directly to such structures as shaped doors or panels; neither can they effectively be used to fill or line many spaces.

It is an object of the present invention to provide a flexible intumescent sheet material which provides enhanced protection against fire damage, and which is sufficiently flexible to be capable of being shaped into plane and intricate forms for application directly to a wide variety of surfaces using simple cutting tools.

British patent application GB 2254609 describes, inter alia intumescent sheet or strip materials comprising ceramic fibres, exfoliating graphite and a polyvinylalcohol binder. Such strip or sheet materials may contain a quantity of glass fibres in addition to the ceramic fibres.

Intumescent compositions are also described in DE-A-4135678, WO-A-88/02019, DE-A-4007060 and WO-A-91/11498.

The present invention provides a flexible intumescent sheet material formed from exfoliating graphite; an aqueous elastomeric binder; and rockwool fibres; the binder constituting from 12% to 20% by weight and the rockwool fibres constituting at least 20% by weight of the material.

The material is typically provided in sheet form, and it is to be understood that the term sheet as used herein includes the case where the material is in strip form.

The rockwool fibres may be present in an amount of up to 70% by weight of the total weight.

The aqueous elastomeric binder can be selected from, for example, an acrylic latex, a styrene butadiene latex, a synthetic rubber latex, polyvinylacetate and polyvinylidine dichloride. The exfoliating graphite, can be present in an amount of up to about 75% by weight of the total weight of the material.

More particularly, the exfoliating graphite may be present in an amount in the range 15% to 70% by weight of the total weight of the material. In general, the concentration of exfoliating graphite used will depend upon the extent of intumescence required and the degree of expansion which the material is required to produce in a given application. The greater the concentration of exfoliating graphite, the greater the degree of expansion produced by the intumescent material in a fire situation.

In a further aspect, the invention provides a method of preparing an intumescent sheet material as hereinbefore defined, the method comprising forming an aqueous slurry of the exfoliating graphite rockwool fibres and aqueous elastomeric binder, depositing a layer of the aqueous slurry on a water-pervious support surface and removing the water from the slurry, for example by the application of vacuum.

In one embodiment, as water is removed from the aqueous slurry by draining through the pervious support surface, additional aqueous elastomeric binder may be applied to the slurry, eg by spray application and drawn down into the slurry by means of an applied vacuum.

In one embodiment, the water may be drained through the water pervious support surface to form a continuous sheet containing less than about 60% moisture, for example about 50% moisture, the continuous sheet then being transferred to a separate air permeable support surface and dried by the application of drying means. Suitable drying means can take the form of one or more drying ovens, infra red or radio frequency drying or steam heated drying cylinders.

The flexible intumescent materials of the present invention can be made on machinery conventionally used for papermaking, for example on a Fourdrinier Paper Machine.

The invention will now be illustrated, but not limited, by reference to the specific embodiments described in the examples below.

### Examples 1 - 3

An aqueous slurry was formed by mixing with an appropriate quantity of water a mixture of rock wool fibres, exfoliating graphite and an acrylic latex binder, in the amounts set out in Table 1 below. The slurry thus produced was deposited as a layer on a forming fabric made from a plastics material of the type conventionally used in paper making. Water was drained through the moving forming fabric to form a continuous sheet to which additional binder was added by spraying the surface of the sheet. The additional binder was drawn into the sheet by the application of vacuum. The continuous sheet containing about 50% moisture was then transferred to an air permeable continuous dryer belt and passed through a series of drying ovens to provide a dried sheet material.

**Table 1**

| Example No: | Rockwool Fibre | Exfoliating Graphite | Binder |
|---|---|---|---|
| 1 | 60% | 25% | 15% |
| 2 | 35% | 50% | 15% |
| 3 | 25% | 60% | 15% |

On subjecting the flexible intumescent sheet materials of the present invention to a fire situation, the presence of the exfoliating graphite causes the product to expand in a multiplicity of directions, the expanded thickness and the pressure created during expansion being dependent upon the amount of graphite used. On heating to 400°C, a sheet with a composition as shown in Example 1 increased to four times its original thickness, Example 2 to eight times its original thickness and Example 3 to twelve times its original thickness.

Intumescent sheet material of 2mm thickness prepared in accordance with the examples above were tested in accordance with BS 476 parts 19 to 23.

The intumescent sheet material of Examples 1 to 3 gave in excess of four hours fire protection.

Fire seals produced in accordance with the invention can be applied directly to a surface to be protected by, for example, double sided adhesive tape or attached to a surface by a liquid adhesive, tacks, pins or, indeed, by any conventional means. The product can readily be dimensioned using scissors, guillotine or other cutting tool. In its flexible form, the seal can readily be made to follow the contour of a round or even a relatively intricate moulded or curved surface. Sheets in accordance with the invention can be employed as intumescent linings for upgrading panelled doors, lath and plaster ceilings and plaster board to give enhanced fire protection. The sheets can also be used as under floor barriers and infill material for fire doors. Also, the sheet material can be used to line metallic surface boxes. It will readily be understood that the aforementioned are simply examples of the many uses to which sheet in accordance with the invention can be put. It will also be understood that the foregoing examples are merely illustrative of the present invention, and that numerous alterations and modifications could be made to the compositions set out in the examples whilst still remaining within the scope of the claims appended hereto.

## Claims

1. A flexible intumescent sheet material formed from exfoliating graphite; an aqueous elastomeric binder; and rockwool fibres; the binder constituting from 12% to 20% by weight and the rockwool fibres constituting at least 20% by weight of the material.

2. A flexible intumescent sheet material according to claim 1 wherein the rockwool fibres are present in an amount of up to 70% by weight of the material.

3. A flexible intumescent sheet material according to Claim 1 or Claim 2 wherein the aqueous elastomeric binder is an acrylic latex.

4. A flexible intumescent sheet material according to claim 1 comprising 60% by weight rockwool fibre, 25% by weight exfoliating graphite and 15% acrylic latex elastomeric binder.

5. A flexible intumescent sheet material according to Claim 1 comprising 35% by weight rockwool fibre, 50% by weight exfoliating graphite and 15% by weight acrylic latex elastomeric binder.

6. A flexible intumescent sheet material according to Claim 1 comprising 25% rockwool fibre, 60% exfoliating graphite, and 15% acrylic latex elastomeric binder.

7. A method of preparing an intumescent material as defined in any one of the preceding claims, the method comprising forming an aqueous slurry of the exfoliating graphite, rockwool fibres and elastomeric binder, depositing a layer of the aqueous slurry on a water-pervious support surface and removing water from the slurry.

8. A method according to claim 7 wherein water is removed from the slurry by the application of vacuum.

9. A method according to any one of claims 7 and 8 wherein, following deposition of the aqueous slurry on the water-pervious support surface, water is drained through the water-pervious support surface to form a continuous sheet having a water content of no greater than 60%, and thereafter transferring the continuous sheet to an air permeable support surface and drying the sheet.

10. A fire seal comprising a flexible intumescent sheet material as defined in any one of claims 1 to 6.

## Patentansprüche

1. Flexibles, sich aufblähendes, flächiges Material, gebildet aus abblätterndem Graphit, einem wässrigen, elastomeren Binder und Steinwollfasern, wobei der Binder zwischen 12 und 20 Gew.% und die Steinwollfasern mindestens 20 Gew.% des Materials bilden.

2. Flexibles, sich aufblähendes, flächiges Material nach Anspruch 1, wobei die Steinwollfasern in einer Menge von bis zu 70 Gew.% des Materials vorhanden sind.

3. Flexibles, sich aufblähendes, flächiges Material nach Anspruch 1 oder 2, wobei der wässrige, elastomere Binder ein Acryllatex ist.

4. Flexibles, sich aufblähendes, flächiges Material nach Anspruch 1, bestehend aus 60 Gew.% Steinwollfasern, 25 Gew.% abblätterndem Graphit und 15 Gew.% elastomerem Acryllatex-Binder.

5. Flexibles, sich aufblähendes, flächiges Material nach Anspruch 1, bestehend aus 35 Gew.% Steinwollfasern, 50 Gew.% abblätterndem Graphit und 15 Gew.% elastomerem Acryllatex-Binder.

6. Flexibles, sich aufblähendes, flächiges Material nach Anspruch 1, bestehend aus 25% Steinwollfasern, 60% abblätterndem Graphit und 15% elastomerem Acryllatex-Binder.

7. Verfahren zur Herstellung eines sich aufblähenden Materials gemäß einem der Ansprüche 1 bis 6, wobei ein wässriger Brei aus dem abblätterndem Graphit, den Steinwollfasern und dem elastomeren Binder gebildet, eine Schicht des wässrigen Breis auf einer wasserdurchlässigen Trägeroberfläche abgelagert und dem Brei das Wasser entzogen wird.

8. Verfahren nach Anspruch 7, wobei das Wasser aus dem Brei durch die Aufbringung eines Unterdruckes entzogen wird.

9. Verfahren nach Anspruch 7 oder 8, wobei nach der Ablagerung des wässrigen Schlamms auf der wasserdurchlässigen Trägeroberfläche das Wasser durch die wasserdurchlässige Trägeroberfläche abgeführt wird, um eine durchgehende Schicht mit einem Wassergehalt nicht größer als 60% zu bilden, und anschließend die durchgehende Schicht auf eine luftdurchlässige Trägeroberfläche verbracht und die Schicht getrocknet wird.

10. Feuersicherung, bestehend aus einem flexiblen, sich aufblähenden, flächigen Material gemäß einem der Ansprüche 1 bis 6.

## Revendications

1. Un produit intumescent flexible sous forme de feuille formé à partir de graphite exfolié; un liant élastomère aqueux; et des fibres de laine de roche; le liant constituant de 12 % à 20% en poids et les fibres de laine de roche constituant au moins 20% en poids du produit.

2. Un produit intumescent flexible sous forme de feuille selon la revendication 1 dans lequel les fibres de laine de roche sont présentes en une quantité jusqu'à 70% en poids du produit.

3. Un produit intumescent flexible sous forme de feuille selon la revendication 1 ou la revendication 2 dans lequel le liant élastomère aqueux est un latex acrylique.

4. Un produit intumescent flexible sous forme de feuille selon la revendication 1 comprenant 60% en poids de fibres de laine de roche, 25% en poids de graphite exfolié et 15% en poids de liant élastomère de latex acrylique.

5. Un produit intumescent flexible sous forme de feuille selon la revendication 1 comprenant 35% en poids de fibres de laine de roche, 50% en poids de graphite exfolié et 15% en poids de liant élastomère de latex acrylique.

6. Un produit intumescent flexible sous forme de feuille selon la revendication 1 comprenant 25% de fibres de laine de roche, 60% de graphite exfolié et 15 % de liant élastomère de latex acrylique.

7. Une méthode de préparation d'une matière intumescente telle que définie dans l'une quelconque des revendications précédentes, la méthode comprenant la formation d'une pâte aqueuse de graphite exfolié, de fibres de laine de roche et de liant élastomère, le dépôt d'une couche de la pâte aqueuse sur une surface de support perméable à l'eau et l'enlèvement de l'eau de la pâte.

8. Une méthode selon la revendication 7 dans laquelle l'eau est enlevée de la pâte par application d'un vide.

9. Une méthode selon l'une quelconque des revendications 7 et 8 dans laquelle, après le dépôt de la pâte aqueuse sur la surface de support perméable à l'eau, l'eau est drainée au travers de la surface de support perméable à l'eau pour former une feuille continue ayant une teneur en eau ne dépassant pas 60%, et ensuite transférer la feuille continue vers une surface de support perméable à l'air et sécher la feuille.

10. Elément d'étanchéité anti-feu comprenant un produit intumescent flexible sous forme de feuille tel que défini dans l'une quelconque des revendications 1 à 6.
